# EUROPEAN PATENT APPLICATION

(11) **EP 4 528 240 A1**
(43) Date of publication of application: **26.03.2025**
(21) Application number: 23829571.1
(22) Date of filing: 04.04.2023
(51) Int. Cl.: G01K 7/00

(54) **TEMPERATURE MEASURING DEVICE FOR POWER CONTACT ELEMENTS ON CIRCUIT BOARD**

(30) Priority: 01.07.2022 CN 202221678367 U
(71) Applicant: Avic Jonhon Optronic Technology Co., Ltd., Luoyang, Henan 471000 (CN)
(72) Inventor: GU, Lele, Luoyang, Henan 471000 (CN); LI, Chenguang, Luoyang, Henan 471000 (CN); WANG, Wei, Luoyang, Henan 471000 (CN)
(74) Representative: Osterhoff, Utz
(86) International application number: PCT/CN2023/086060
(87) International publication number: WO 2024/001381

(57) **Abstract**

A temperature measuring device for a power contact elements on a circuit board, including a circuit board, the power contact elements and a temperature sensor. A heat conduction object is connected to position of the circuit board corresponding to the power contact elements; the heat conduction object is provided with a profiling heat conduction surface fitting the surface of the corresponding power contact elements and a sensor accommodating groove provided spaced apart from the profiling heat conduction surface, and the sensor accommodating groove is configured to accommodate the corresponding temperature sensor; and a connecting portion of the temperature sensor is connected to the circuit board. According to the present utility model, a heat transfer channel from the power contact elements to the temperature sensor is formed through the insulated heat conduction object. On the premise of insulating the temperature sensor, the temperature sensor is enabled to be close to the power contact elements, so that the temperature sensor can be prevented from high-voltage breakdown, and the accuracy of temperature measurement can be ensured.

## Description

### TECHNICAL FIELD

The present utility model belongs to the field of temperature measurement, and in particular relates to a temperature measuring device for a power contact elements on a circuit board.

### BACKGROUND

The signal integration of a DC charging socket for an electric vehicle is the development direction of the industry. A temperature sensor is usually integrated on a circuit board in a DC charging socket to measure the temperature of a power contact elements. However, in order to achieve more accurate temperature measurement, the temperature sensor is mounted close to the power contact elements; as a result, the temperature sensor is subjected to high voltage breakdown of the power contact elements, and even the high voltage of the power contact elements can penetrate the low voltage part of the circuit board through a pin of the temperature sensor. To prevent the temperature sensor from breakdown, the temperature sensor is installed far away from the power contact elements, which will cause inaccurate temperature measurement.

### SUMMARY

The present utility model aims to provide a temperature measuring device for a power contact elements on a circuit board. A heat transfer channel from the power contact elements to a temperature sensor is formed through an insulated heat conduction object. On the premise of insulating the temperature sensor, the temperature sensor is enabled to be close to the power contact elements, so that the temperature sensor can be prevented from high-voltage breakdown, and the accuracy of temperature measurement can be ensured.

In order to achieve the above purpose, the present utility model adopts the technical solution: a temperature measuring device for a power contact elements on a circuit board, including a circuit board, the power contact elements and a temperature sensor. A heat conduction object made of an insulating material is connected to a position of the circuit board corresponding to the power contact elements; the heat conduction object is provided with a profiling heat conduction surface fitting the surface of the corresponding power contact elements and a sensor accommodating groove provided spaced apart from the profiling heat conduction surface, and the sensor accommodating groove is configured to accommodate the corresponding temperature sensor; and a connecting portion of the temperature sensor is connected to the circuit board.

As one embodiment, the profiling heat conduction surface is a closed cylinder surface or a cylinder surface having an opening formed in the circumferential direction.

Further, the cylinder surface is a cylindrical surface, a prismatic surface, or a combination of the two.

As another embodiment, a fixing groove is provided in one surface of the heat conduction object opposite the circuit board; a mounting hole is formed in the circuit board; and the mounting hole and the fixing groove of the heat conduction object are snap-fitted to realize connection between the heat conduction object and the circuit board.

As another embodiment, a connecting column is provided on the heat conduction object; a connecting hole is provided in the circuit board; and the heat conduction object is connected to the circuit board by means of inserting match of the connecting hole and the connecting column.

Further, the mounting hole is formed in the circuit board; and the connecting hole is formed around the mounting hole.

Furthermore, a fixing groove is provided in one surface of the heat conduction object opposite the circuit board; and the mounting hole and the fixing groove of the heat conduction object are snap-fitted.

As one choice, a boss is provided on one surface of the heat conduction object butted with the circuit board; and the fixing groove is formed in two sides of the boss.

According to the above solution, the temperature sensor is provided with a bendable pin; the pin is connected to a bonding pad on the circuit board; and a measuring end of the temperature sensor is positioned in the sensor accommodating groove.

According to the above solution, the temperature sensor is a chip type temperature sensor; and the chip type temperature sensor is attached to the bonding pad of the circuit board and is coated in the sensor accommodating groove.

The beneficial effects of the present utility model are as follows: the measuring end of the temperature sensor is placed inside an insulated heat conduction object to form good insulation from the temperature sensor by means of the heat conduction object, so that the chip of the measuring end of the temperature sensor is closer to the power contact elements, high voltage breakdown is avoided, a heat transfer distance is shortened, the temperature measurement accuracy is improved, a creepage distance is increased, and a transfer channel between the temperature sensor and the heat conduction object is established. The heat conduction object is closely attached to the power contact elements by means of the profiling heat conduction surface to establish a heat transfer channel between the heat conduction object and the power contact elements, so that the heat of the power contact elements is conducted to the temperature sensor through the thermal conduction of the heat conduction object to ensure the accuracy of the temperature sensor.

According to the present utility model, the temperature sensor with a pin can be used, and the chip type temperature sensor also can be used. When a temperature sensor with a pin is used, compared to the prior art, the connecting position of the pin of the temperature sensor on the circuit board can be kept unchanged. At this time, the temperature sensor can be closer to the power contact elements only by bending the pin of the temperature sensor to place the chip of the temperature sensor in the sensor accommodating groove of the heat conduction object, and the heat conduction object provides insulation protection for the temperature sensor to avoid high-voltage breakdown. When a chip type temperature sensor is used, the chip type temperature sensor is close to the power contact elements, is attached to the bonding pad of the circuit board and is coated in the sensor accommodating groove, and the heat conduction object can also provide insulation protection for the temperature sensor to avoid high-voltage breakdown.

### BRIEF DESCRIPTION OF DRAWINGS

FIG. 1 is a structural exploded view in Example 1 of the present utility model;
FIG. 2 is a schematic structure diagram of the heat conduction object in Example 1 of the present utility model; and

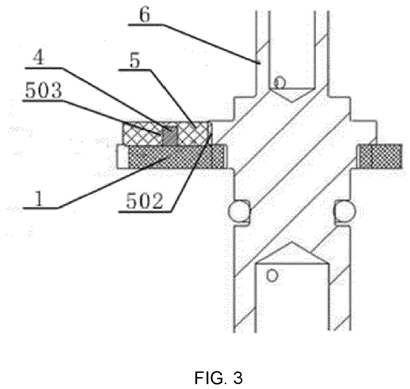

FIG. 3 is a side -sectional view in Example 2 of the present utility model;

In the figures, 1. Circuit board, 2. Mounting hole, 3. Connecting hole, 4. Temperature sensor, 5. Heat conduction object, 501. Via hole, 502. Profiling heat conduction surface, 503. Sensor accommodating groove, 504. Boss, 505. Fixing groove, 506. Connecting column, and 6. Power contact elements.

### DETAILED DESCRIPTION OF THE EMBODIMENTS

The present utility model is further described in detail below in combination with the drawings and the examples, but the drawings and the examples do not serve as a basis for any limitation on the utility model.

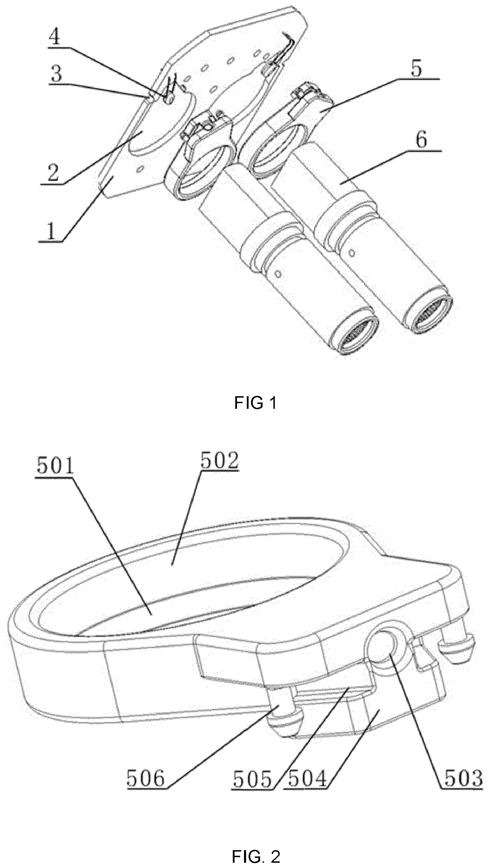

Example 1: as shown in FIGS. 1 and 2, a temperature measuring device for a power contact elements on a circuit board, including a circuit board 1, the temperature sensor 4, a heat conduction object 5 and a power contact elements 6. The heat conduction object 5 is made of an insulating heat conduction material, such as rubber. The temperature sensor of the example is provided with a bendable pin.

The circuit board 1 is provided with a mounting hole 2 and a connecting hole 3; the heat conduction object 5 is mounted in the mounting hole 2 and is fixedly connected to the circuit board 1 by means of connecting structures arranged on the heat conduction object 5; the heat conduction object 5 is provided with a via hole 501 allowing the power contact elements 6 to pass through; an inner wall of the via hole 501 serves as a profiling heat conduction surface 502; the profiling heat conduction surface 502 closely fits a surface of the power contact elements 6, so that heat generated by the power contact elements 6 can be conducted to the heat conduction object 5 by means of the profiling heat conduction surface 502; a sensor accommodating groove 503 is provided in one end of the heat conduction object 5 away from the profiling heat conduction surface 502; a measuring end of the temperature sensor 4 is placed in sensor accommodating groove 503; a pin of the temperature sensor 4 is a connecting end; and after being bent by certain degrees, the pin is welded on a bonding pad of the circuit board 1.

Continue to refer to FIG. 2, the via hole 501 in the heat conduction object 5 is a circular through hole, and the hole wall of the via hole is a closed cylindrical surface. Two types of connecting structures are provided on the heat conduction object 5; one is two connecting columns 506 arranged on one side of the heat conduction object 5 towards the circuit board 1, where each conical head is provided at one end of the connecting column 506; the diameter of the major diameter end surface of the conical head is greater than the diameter of the connecting column 506, so that an annular stop surface around the connecting column 506 is formed on the major diameter end surface; the conical head is elastic; during the process that the heat conduction object 5 is assembled on the circuit board 1, the connecting holes 3 of the circuit board 1 extrude the conical heads, so that the conical heads deform to pass through the connecting holes 3, and then the conical heads recover to be clamped around the connecting hole 3 of the circuit board 1 so as to realize connection between the heat conduction object 5 and the circuit board 1; and the other is a boss 504 arranged on one side of the heat conduction object 5 towards the circuit board and fixing grooves 505 formed in two sides of the boss 504, where the boss 504 has certain elasticity; during the process that the heat conduction object 5 is assembled on the circuit board 1, the mounting hole 2 of the circuit board 1 extrude the boss 504, so that the boss 504 deforms to cross the mounting hole 2, and edges of the mounting holes 2 are clamped in the two fixing grooves 505 of the boss 504 to realize connection between the heat conduction object 5 and the circuit board 1.

In the present example, the two types of connecting structures are used at the same time, and the boss 504 is arranged between the two connecting columns 506. During practical application, it is feasible to use the first or the second connecting structure only according to the actual situation.

The shape of the profiling heat conduction surface 502 of the heat conduction object 5 depends on the shape of the part of the power contact elements 6 in contact elements with the heat conduction object. In the present example, the via hole 501 of the heat conduction object 5 is a circular through hole, and the profiling heat conduction surface 502 of the heat conduction object 5 is a circumferentially closed cylindrical surface.

In other embodiments, the profiling heat conduction surface 502 may be a circumferentially closed prismatic surface or a combined cylinder surface of a cylindrical surface and a prismatic surface.

According to the present utility model, the measuring end of the temperature sensor 4 can be closer to the power contact elements 6 without changing the existing connecting position of the temperature sensor 4 on the circuit board 1. For example, after the pin of the temperature sensor 4 is connected to the bonding pad of the circuit board 1, the distance from the connecting position to the power contact elements 6 is 6 mm, the distance can prevent the temperature sensor 4 from high-voltage breakdown of the power contact elements, but the measuring accuracy of the temperature sensor 4 will be subjected to an adverse effect; after using the solution of the present utility model, the distance from the pin to the power contact elements 6 is unchanged, and the pin is bent, so that the measuring end of the temperature sensor 4 enters the mounting hole 2 of the heat conduction object 5, at the moment, the measuring end of the temperature sensor 4 is closer to the power contact elements 6, and the distance can be 2 mm; and with the insulated protection of the heat conduction object 5, the temperature sensor 4 is prevented from high-voltage breakdown, and the measuring accuracy of the temperature sensor 4 is improved.

Example 2: in the present example, the profiling heat conduction surface 502 may be a cylinder surface having an opening in the circumferential direction, and also may be a cylindrical surface, a prismatic surface or a combined cylinder surface of the cylindrical surface and the prismatic surface. The temperature sensor 4 also may be a chip type temperature sensor, and the chip type temperature sensor is attached to the bonding pad of the circuit board 1 and is coated in the sensor accommodating groove 503. The heat conduction object 5 is embedded in a groove in the surface of the circuit board 1 to realize connection with the circuit board 1.

It should be noted that the above examples are only used to illustrate the technical solution of the present utility model and are not for limitation. Those of ordinary skill in the art should understand that the specific embodiments of the present utility model may be modified or replaced by equivalents without departing from the spirit and scope of the present utility model, and all those modifications or replacements should be included in the scope of the claims of the present application.

## Claims

1. A temperature measuring device for a power contact elements on a circuit board, comprising a circuit board (1), the power contact elements (6) and a temperature sensor (4), wherein a heat conduction object (5) made of an insulating material is connected to a position of the circuit board (1) corresponding to the power contact elements (6); the heat conduction object (5) is provided with a profiling heat conduction surface (502) fitting the surface of the corresponding power contact elements (6) and a sensor accommodating groove (503) provided spaced apart from the profiling heat conduction surface (502), and the sensor accommodating groove (503) is configured to accommodate the corresponding temperature sensor (4); and a connecting portion of the temperature sensor (4) is connected to the circuit board (1).

2. The temperature measuring device for the power contact elements on the circuit board according to claim 1, wherein the profiling heat conduction surface (502) is a closed cylinder surface or a cylinder surface having an opening formed in the circumferential direction.

3. The temperature measuring device for the power contact elements on the circuit board according to claim 2, wherein the cylinder surface is a cylindrical surface, a prismatic surface, or a combination of the two.

4. The temperature measuring device for the power contact elements on the circuit board according to claim 1, wherein a fixing groove (505) is provided in one surface of the heat conduction object (5) opposite the circuit board (1); a mounting hole (2) is formed in the circuit board (1); and the mounting hole (2) and a fixing groove (505) of the heat conduction object (5) are snap-fitted to realize connection between the heat conduction object (5) and the circuit board (1).

5. The temperature measuring device for the power contact elements on the circuit board according to claim 1, wherein a connecting column (506) is provided on the heat conduction object (5); a connecting hole (3) is provided in the circuit board (1); and the heat conduction object (5) is connected to the circuit board (1) by means of inserting match of the connecting hole (3) and the connecting column (506).

6. The temperature measuring device for the power contact elements on the circuit board according to claim 5, wherein the mounting hole (2) is formed in the circuit board (1); and the connecting hole (3) is formed around the mounting hole (2).

7. The temperature measuring device for the power contact elements on the circuit board according to claim 6, wherein the fixing groove (505) is provided in one surface of the heat conduction object (5) opposite the circuit board (1); and the mounting hole (2) and the fixing groove (505) of the heat conduction object (5) are snap-fitted.

8. The temperature measuring device for the power contact elements on the circuit board according to claim 4 or claim 7, wherein a boss (504) is provided on one surface of the heat conduction object (5) butted with the circuit board (1); and the fixing groove (505) is formed in two sides of the boss (504).

9. The temperature measuring device for the power contact elements on the circuit board according to any one of claims 1-7, wherein the temperature sensor (4) is provided with a bendable pin; the pin is connected to a bonding pad on the circuit board (1); and a measuring end of the temperature sensor (4) is positioned in the sensor accommodating groove (503).

10. The temperature measuring device for the power contact elements on the circuit board according to any one of claims 1-7, wherein the temperature sensor (4) is a chip type temperature sensor; and the chip type temperature sensor is attached to the bonding pad of the circuit board (1) and is coated in the sensor accommodating groove (503).
